Europäisches Patentamt

European Patent Office

Office européen des brevets

(19)

(11) Veröffentlichungsnummer: **0 034 698**

A1

(12) # EUROPÄISCHE PATENTANMELDUNG

(21) Anmeldenummer: **81100283.1**

(51) Int. Cl.³: **C 09 K 5/06**

(22) Anmeldetag: **16.01.81**

(30) Priorität: **19.01.80 DE 3001903**

(43) Veröffentlichungstag der Anmeldung:
**02.09.81 Patentblatt 81/35**

(84) Benannte Vertragsstaaten:
**AT CH FR GB IT LI NL**

(71) Anmelder: **Laing, Oliver**
**Hofener Weg 35-37**
**D-7148 Remseck 2 - Aldingen(DE)**

(72) Erfinder: **Schaper, Peter, Dr.**
**Am Remsufer 8/4**
**D-7148 Remseck-1(DE)**

(72) Erfinder: **Laing, Oliver, Dipl.Phys.**
**Hofenerweg 37**
**D-7148 Remseck-2(DE)**

(54) **Speichermasse zur Speicherung latenter Wärme und ihre Anwendung.**

(57) Speichermasse zur Speicherung latenter Wärme mit einem Gehalt an Natriumchromat oder an Natriumazetat, wobei die Speichermasse im Falle des Vorliegens von Natriumchromat soviel Wasser enthält, daß pro Mol Natriumchromat mindestens 10 Mol Wasser in ihr enthalten sind, und im Falle des Vorliegens von Natriumazetat mehr Wasser in ihr enthalten ist, als stöchiometrisch zur Bildung des Hydrates erforderlich ist. Die Speichermasse mit dem Gehalt an Natriumchromat kann zur Raumluftkühlung angewendet werden, wobei sie während der Tagesstunden überschüssige Raumluftwärme unter Schmelzen aufnimmt und während der Nachtstunden Kristallisationswärme abgibt.

EP 0 034 698 A1

- 1 -

Die Erfindung betrifft Wärmespeichermassen, die sich insbesondere für die Raumluftkühlung eignen.

Der grössere Teil der Menschheit lebt in Klimazonen, in denen die Tagestemperaturen während der Einstrahlungsstunden so hoch liegen, dass physiologisch optimale Raumtemperaturen nur durch künstliche Kühlung erzielbar sind. Der Primärenergiebedarf ist dabei vergleichsweise höher als beim Heizen, denn maschinelle Kälteanlagen können nur mit mechanischer Energie betrieben werden, deren Erzeugung ein Mehrfaches an Primärenergie erfordert.

Eine Aufgabe der Erfindung besteht darin, die überschüssige Raumwärme zu absorbieren. Dazu wird diese überschüssige Wärme Wärmespeichern zugeführt, die als Speichermasse kristalline Stoffe enthalten, die bei einer Temperatur, die unterhalb der physiologisch optimalen Raumtemperatur liegt, schmelzen und dabei bei der Schmelztemperatur die überflüssige Wärme aufnehmen. Durch dieses Verfahren ist es möglich, der Raumluft laufend Wärme zu entziehen, ohne dass die Wirksamkeit des thermischen Speichers nachlässt, bevor er vollständig aufgeladen ist. Sobald die Umgebungstemperatur abends oder nachts unter die Kristallisationstemperatur der Speicher absinkt, wird die am Tage gespeicherte Wärme in Form von Kristallisationswärme an die Aussenluft abgegeben oder nach aussen abgestrahlt, so dass am darauffolgenden Tag der Kühlvorgang von neuem beginnen kann.

Zur Durchführung dieses Verfahrens werden die kristallinen Massen in grossflächigen Behältern untergebracht, deren Oberflächen mit strömender Luft oder auch einem anderen Fluid in Wärmetausch stehen. Als geeignete Kristallisationstemperaturen haben sich Temperaturen zwischen 18°C und 26°C erwiesen. Für diesen Temperaturbereich waren bisher keine kristallisierenden Massen bekannt. Die erste Forderung ist deshalb auf entsprechende Schmelz- und Kristallisationstemperaturen gerichtet.

Die Erfindung lehrt, wie sich Speichermassen gewinnen lassen, die in diesem Temperaturbereich kristallisieren und die sich häufig vom flüssigen in den festen Zustand und umgekehrt überführen lassen.

Eine zweite Forderung an Speichermassen, die in grossflächigen Behältern eingeschlossen sind, ist die Volumenkonstanz beim Phasenübergang. Während fast alle bekannt gewordenen schmelzbaren Speichermassen eine Ausdehnung beim Schmelzen erfahren (z.B. KOH ca. 28 %), weist Wasser eine Kontraktion von 10 % beim Schmelzen auf. Alle Speichermassen, die eine Volumenänderung erfahren, eignen sich für Klimatisierungszwecke, bei denen die Speicherbehälter gleichzeitig als Wärmeübertragerrippen ausgebildet sind, nicht. Zur technischen Verwirklichung der Raumkühlung unter Verwendung von Latentspeichermassen ist deshalb auch eine weitgehende Volumenkonstanz erforderlich. Diese ist erfindungsgemäss bei Hydraten zu verwirklichen, bei denen ein wesentlicher Teil der Speichermasse aus Kristallwasser besteht.

Die dritte Forderung betrifft die Erhaltung der Kapazität. Hydrate konnten sich bisher als Speichermassen nicht durchsetzen, denn es hat sich gezeigt, dass Hydrate altern. Jedes Salz, das Hydrate bildet, kann Hydrate mit unterschiedlich vielen Hydratations-Molekülen, bezogen auf die wasserfreie Substanz, bilden. Kristalle mit unterschiedlich vielen Hydratations-Molekülen schmelzen jedoch bei unterschiedlichen Temperaturen, so dass sich die Kristallisationstemperaturen von solchen Speichern im Laufe der Zeit ändern, wodurch die Kapazität bei den gewünschten Temperaturen abnimmt oder sogar zu Null wird.

Die vierte Forderung betrifft die Verträglichkeit der Speichermasse mit dem Behälterwerkstoff. Für Speichermassen, die in flachen, grossflächigen Gefässen eingeschlossen werden, kommen nur Blechbehälter oder Kunststoffbehälter infrage. Deshalb sind nur Chemikalien geeignet, die sich gegenüber Eisen und Aluminium sowie gegenüber blas- und extrusionsfähigen Kunststoffen inert verhalten.

0034698

Überraschenderweise wurde gefunden, dass die nachstehend beschriebenen Substanzen alle obigen Forderungen erfüllen:

Im Nachstehenden sind jeweils Gewichtsprozente angegeben.

1. Eine erste Substanz besteht gemäss der Erfindung aus

    36,45 Gew.-% $Na_2CrO_4$

    44,55 Gew.-% $H_2O$

    10-15 Gew.-% quellfähiger Zellulose

    4- 9 Gew.-% einer oder mehrerer Substanzen aus der Gruppe $C_2H$
               (nach Schoenflies), z.B. $Na_2B_4O_7 \cdot 10\ H_2O$ und/oder
               $Na_2SO_4 \cdot 10\ H_2O$.

Ein besonders wirtschaftliches Stoffgemisch nach der Erfindung wird mit Papierschlamm hergestellt, der als unvermeidliches Abfallprodukt bei der Papierherstellung anfällt. Solche Papierschlämme enthalten stets neben der Zellulose eine oder mehrere anorganische Substanzen aus der Gruppe $BaSO_4$, $Al_2O_3$, $CaCO_3$ und $TiO_2$. Unter Papierschlamm wird dabei das Abfallprodukt bei der Herstellung von Papier verstanden, das in der Kläranlage anfällt. Statt des Papierschlammes kann auch ein Papierbrei verwendet werden, wie er bei der Aufbereitung von Altpapier anfällt. Auch Produkte aus der Aufbereitung von Zuckerrohr, Torf und Stroh sind geeignet, an die Stelle reiner Zellulose zu treten.

Weitere Ausführungsbeispiele sind:

2. Gemischt werden in gekühlten Mischern unter Ableitung der Reaktions-. wärme bei Temperaturen unter 55°C:

        9,3 Gew.-% NaOH

      34,6 Gew.-% $Na_2Cr_2O_7 \cdot 2\ H_2O$

      33,1 Gew.-% Schlamm aus der Papierfabrikation, dessen Feststoff aus
                etwa 60 % Zellulosefasern sowie den anorganischen
                Beimischungen zum Papier besteht, insbesondere einer
                oder mehrerer aus der Gruppe folgender Substanzen:
                $BaSO_4$, $Al_2O_3$, $TiO_2$, $CaCO_3$

      19,2 Gew.-% $H_2O$

       3,8 Gew.-% $Na_2B_4O_7 \cdot 10\ H_2O$.

Die beschriebene Masse besitzt nach der Abführung der Reaktionswärme eine Wärmekapazität von 130 kJ/kg. Die Dichte beträgt 1,5 kg/l.

Die Masse hat eine Kristallisationstemperatur zwischen 18°C und 19°C.

Auch nach 6000 Auf- und Entladungen ändern sich die Werte nicht.

Die Volumenänderung beim Phasendurchgang ist unmessbar klein.

Die Masse greift Eisen, Aluminium und Kunststoffe nicht an.

3. In einem homogenen Brei, bestehend aus

31,7 Gew.-% feinst zerkleinertem Zuckerrohrschlamm

23,3 Gew.-% Wasser werden unter Kühlung des Mischgefässes, so dass die Temperatur des Mischgutes 55°C nicht übersteigt,

40,8 Gew.-% $Na_2CrO_4$ gelöst,

4,2 Gew.-% $Na_2B_4O_7 \cdot 10\ H_2O$, die nach Homogenisierung und Abkühlung auf 50°C in die Masse homogen eingerührt werden.

4. Zu 89,4 Gew.-% einer Schmelze von $Na_2CrO_4 \cdot 10\ H_2O$ werden bei einer Temperatur zwischen 35°C und 50°C

6,7 Gew.-% getrockneter Papierbrei aus der Aufbereitung von Altpapier homogen eingerührt. Daraufhin wird ein Gemisch aus

3,4 Gew.-% $Na_2B_4O_7 \cdot 10\ H_2O$ und

0,5 Gew.-% $Na_2SO_4 \cdot 10\ H_2O$ und

0,89 Mol $H_2O$ (bezogen auf $Na_2CrO_4 \cdot 10\ H_2O$) eingerührt.

5. Man löst unter Kühlung 10,6 Gew.-% NaOH in dem Papierschlamm-Wasserbrei, der aus 31,1 Gew.-% Papierschlamm und 16,1 Gew.-% $H_2O$ besteht.

Dann fügt man langsam unter Kühlung +39,3 Gew.-% $Na_2Cr_2O_7 \cdot 2\ H_2O$ hinzu.

Die Temperatur darf bei den Verfahrensschritten 60°C nicht überschreiten.

Nach der Abkühlung der homogen zu rührenden Masse auf eine Temperatur unter 50°C werden 3 Gew.-% $Na_2B_4O_7 \cdot 10\ H_2O$ oder $Na_2SO_4 \cdot 10\ H_2O$ eingerührt.

6. Es werden 11,4 Gew.-% NaOH in 17,7 Gew.-% $H_2O$ gelöst. Dabei führt man die Solvationswärme ab. In die erkaltete Lösung werden

33,6 Gew.-% Papierschlamm eingerührt. Daraufhin werden bei Kühlung

32,7 Gew.-% $Na_2Cr_2O_7 \cdot 2\ H_2O$ langsam eingebracht, wobei die Temperatur nicht über 55°C steigen darf. Nach der Abkühlung auf unter 50°C werden 4,6 Gew.-% $Na_2B_4O_7 \cdot 10\ H_2O$ in die Masse eingemischt.

In allen Verfahren soll die Mischung zum Zeitpunkt der Zugabe der quellfähigen Zellulose alkalisch sein, weil hierdurch die Quellfähigkeit erhöht
wird.

Durch den Zusatz von $Na_2SO_4 \cdot 10\,H_2O$ lässt sich die Schmelztemperatur der
Speichermasse anheben. Jede Temperatur zwischen 19°C und 31,9°C ist
dadurch erreichbar.

Die Schmelztemperatur lässt sich erfindungsgemäss jedoch auch absenken.
Dies erfolgt durch den Zusatz von $CO(NH_2)_2$, wobei ein Zufügen von 1 % zu
einer Temperaturabsenkung von etwa 1,2 K führt, während 2 % zu einer
Temperaturabsenkung von etwa 2,3 K führen.

Durch Zusatz des Papierschlammes bzw. der erwähnten Abfälle aus der
Zuckerrohr- oder Strohverarbeitung oder auch von gemahlenem Torf wird
die Speichermasse so weit eingedickt, dass die einzelnen Komponenten
unterschiedlicher Dichte sich nicht mehr trennen.

Ist die Möglichkeit gegeben, durch Schütteln oder Umpumpen der Speichermasse ein Separieren der Bestandteile zu verhindern, so eignet sich eine
Mischung aus

7.  $Na_2CrO_4 + 10$ Mol $H_2O$

Dieser Mischung werden/nicht lösliche Kristalle der Gruppe $C_{2h}$ nach der Kristallbau-
Systematik von Schoenflies, die einen Schmelzpunkt von über 30°C aufweisen, zugemischt. Je feiner die Kristalle sind, um so kleiner ist die erforderliche Menge. Es genügen 0,1 bis 1 %.

Der Mischung wird zusätzlich Wasser, vorzugsweise 0,98 Mol zugesetzt.
Dieses Verfahren, dem Anhydrid mehr Wasser zuzusetzen, als zur Bildung
des gewünschten Hydrates erforderlich ist, hat sich auch bei Speichermassen für andere Temperaturen als wirksames Mittel zur Unterdrückung
unerwünschter Hydrate oder der Kristallisation von Anhydrid erwiesen.
Die Anwendung dieser Massnahme ist deshalb nicht auf $Na_2CrO_4$ beschränkt,
sondern auch bei anderen Speichermassen, z.B. Natriumazetat anwendbar.

Die Schmelze ist so dünnflüssig, dass sie leicht und mit geringer hydraulischer Pumpleistung zur Erhaltung der Homogenität und zur Vergrösserung des Wärmeüberganges zur Wandung hin umgepumpt werden kann. Beim Umpumpen der flüssigen Speichermasse tritt allerdings der vorteilhafte Wärmeübergang nur beim Laden auf, während beim Entladen die kristallisierte Speichermassenschicht vom Wärmestrom durchsetzt werden muss. Soll jedoch auch beim Entladen der Wärmeübergang verbessert werden, so ist es erforderlich, dass auch noch die kristallisierte Speichermasse pumpfähig bleibt. Dies ist erfindungsgemäss dadurch möglich, dass der Schmelze eine Hilfsflüssigkeit zugesetzt wird, die die gleiche Dichte besitzt wie die Schmelze, jedoch mit der Schmelze nicht mischbar ist. Diese Hilfsflüssigkeit kann entsprechend ihrer Dichte auch aus mehreren miteinander mischbaren Komponenten bestehen. So eignet sich ein Gemisch aus ca. zwei Gewichtsteilen Trichloräthylen und einem Gewichtsanteil Tetrachloräthylen als Hilfsflüssigkeit für die Speichermasse gemäss 7. Eine Menge von 10 Vol.-%, bezogen auf die Schmelze der Speichermasse lassen ein Umpumpen bis zum Entzug von etwa 90 % der latenten Wärme zu. Vergrössert man den Anteil der Hilfsflüssigkeit, bleibt die Speichermasse sogar bis zur vollkommenen Entladung umpumpbar. An die Stelle der Chlorkohlenwasserstoffe können auch andere, mit der Speichermasse nicht mischbare Flüssigkeiten, z.B. Silikonöle sowie alle Kohlenwasserstoffe, die Chlor, Brom oder Fluor enthalten, treten. Auch dieses Verfahren ist nicht auf Chromsalze beschränkt, sondern auch bei vielen anderen Speichermassen anwendbar (z.B. bei Natriumazetat).

Auch ist der Einsatz der erfindungsgemässen Speichermassen nicht auf Verfahren und Vorrichtungen zur Raumluftkühlung beschränkt. So eignet sich die neue Speichermasse z.B. auch zur Aufnahme der Wärme eines Energiedaches während der Tagesstunden und zur Abgabe der Wärme an eine Wärmepumpe während der Nachtstunden.

Patentansprüche

1. Speichermasse zur Speicherung latenter Wärme, dadurch gekennzeichnet, dass sie $Na_2CrO_4$ enthält und ausserdem pro Mol $Na_2CrO_4$ mindestens 10 Mol $H_2O$.

2. Speichermasse nach Anspruch 1, dadurch gekennzeichnet, dass sie ausserdem Kristalle aus der Gruppe $C_{2h}$ (nach Schoenflies), z.B. $Na_2B_4O_7 \cdot 10\,H_2O$ und/oder $Na_2SO_4 \cdot 10\,H_2O$ in einer solchen Menge, z.B. 0,1 bis 1 %, enthält, dass ein Teil dieser Kristalle in der Schmelze ungelöst bleibt.

3. Speichermasse nach Anspruch 1, dadurch gekennzeichnet, dass ihr eine quellfähige Substanz, z.B. Papierschlamm zugesetzt wird.

4. Speichermasse nach Anspruch 3, dadurch gekennzeichnet, dass die quellfähige Substanz aus Substanzen mit quellfähiger Zellulose, wie z.B. gemahlenen Zuckerrohrabfällen, Stroh, Altpapier, Papierschlamm oder Torf besteht.

5. Speichermasse nach Anspruch 2, dadurch gekennzeichnet, dass die Speichermasse auch $Na_2SO_4 \cdot 10\,H_2O$ enthält.

6. Speichermasse nach Anspruch 2, dadurch gekennzeichnet, dass die Speichermasse auch Harnstoff, vorzugsweise 1 bis 2 % enthält.

7. Speichermasse nach Anspruch 2, dadurch gekennzeichnet, dass sie in flachen, von fliessbarem Wärmeträger umströmten Behältern eingeschlossen ist, die aus Eisenblech oder Kunststoff bestehen.

8. Verfahren zur Raumluftkühlung, dadurch gekennzeichnet, dass einer Speichermasse gemäss Anspruch 1 während der Tagesstunden überschüssige Raumluftwärme bei einer Temperatur aufgeprägt wird, die unterhalb der physiologisch optimalen Raumlufttemperatur liegt, und dass dieser Speichermasse während der Nachtstunden Kristallisationswärme bei einer Temperatur, die oberhalb der nächtlichen Aussentemperatur liegt, entzogen wird.

9. Verfahren zur Verhinderung der Bildung von Hydraten mit einer unerwünscht niedrigen Zahl von Hydratations-Molekülen oder von Anhydrid bei Speichermassen mit Hydraten, insbesondere Speichermassen gemäss Anspruch 1 oder Natriumazetat, dadurch gekennzeichnet, dass dem Hydrat Wasser zugesetzt wird oder dem Anhydrid mehr Wasser (z.B. 1 Mol) zugesetzt wird, als stöchiometrisch zur Bildung des Hydrates erforderlich ist.

10. Verfahren nach Anspruch 9 für Speichermassen nach Anspruch 1, dadurch gekennzeichnet, dass der Wassergehalt pro Mol $Na_2CrO_4$ auf etwa 10,98 Mol eingestellt wird.

11. Verfahren zur Verhinderung des Zusammenwachsens der Kristalle von Hydraten, insbesondere von Speichermassen nach Anspruch 1, dadurch gekennzeichnet, dass der Schmelze eine mit der Schmelze nicht oder fast nicht mischbare Hilfsflüssigkeit beigemengt wird, die bei der Schmelztemperatur des Hydrates das gleiche Raumgewicht aufweist wie die Schmelze.

12. Hilfsflüssigkeit nach Anspruch 11, dadurch gekennzeichnet, dass sie aus chlor-, jod-, brom- oder fluorhaltigen Kohlenwasserstoffen besteht.

0034698

Nummer der Anmeldung

Europäisches
Patentamt

**EUROPÄISCHER RECHERCHENBERICHT**

EP 81100283.1

| Kategorie | Kennzeichnung des Dokuments mit Angabe, soweit erforderlich, der maßgeblichen Teile | betrifft Anspruch |
|---|---|---|
| | DE - C - 112 245 (DEUTSCHE THERMO-PHORGESELLSCHAFT) <br><br> + Seite 1, Spalte 1, Absatz 2 + <br><br> -- | 1,9 |
| | DE - A1 - 2 639 173 (THE UNI-VERSITY OF DELAWARE) <br><br> + Seite 7, Absatz 2; Seite 8, Absatz 1 + <br><br> -- | 1,3,4 |
| | DE - A1 - 2 753 598 (FRIEDERICHS) <br><br> + Ansprüche 1,3,5; Seite 3, Absatz 1 + <br><br> -- | 1,6,9, 11 |
| | FR - A - 1 050 933 (TELKES) <br><br> + Seite 4, Spalte 2, Absatz 4; Seite 4, Spalte 1; Patentan-sprüche + <br><br> -- | 1,2,7 |
| | US - A - 1 656 366 (STERLING, CROOKER) <br><br> + Patentansprüche + <br><br> ---- | 1,9 |

**KLASSIFIKATION DER ANMELDUNG** (Int. Cl.³)

C 09 K 5/06

**RECHERCHIERTE SACHGEBIETE** (Int. Cl.³)

C 09 K

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 17-03-1981 | PILLERSTORFF |

EPA form 1503.1  06.78